# EUROPÄISCHE PATENTSCHRIFT

(11) **EP 0 904 533 B1**
(45) Veröffentlichungstag und Bekanntmachung des Hinweises auf die Patenterteilung: **04.06.2003**
(21) Anmeldenummer: 97914159.5
(22) Anmeldetag: 03.03.1997
(51) Int. Cl.: G01N 27/407

(54) **SENSOR ZUR BESTIMMUNG DER KONZENTRATION OXIDIERBARER BESTANDTEILE IN EINEM GASGEMISCH**
SENSOR FOR DETERMINING THE CONCENTRATION OF OXIDISABLE ELEMENTS IN A GAS MIXTURE
DETECTEUR POUR DETERMINER LA CONCENTRATION DE CONSTITUANTS OXYDABLES D'UN MELANGE GAZEUX

(30) Priorität: 11.06.1996 DE 19623212
(43) Veröffentlichungstag der Anmeldung: 31.03.1999
(73) Patentinhaber: ROBERT BOSCH GMBH, 70442 Stuttgart (DE)
(72) Erfinder: SCHUMANN, Bernd, D-71277 Rutesheim (DE)
(86) Internationale Anmeldenummer: DE9700380
(87) Internationale Veröffentlichungsnummer: WO97047962

(56) Entgegenhaltungen:
- WO-A-87/02715
- WO-A-95/00836
- DE-A- 4 225 775
- GB-A- 2 029 578
- GB-A- 2 186 091
- J. ELECTROCHEM. SOC., Bd. 126, Nr. 5, Mai 1979, USA, Seiten 844-850, XP000674338 R.H. WILSON ET AL: "Characterized semiconductor electrodes. I. Effect of processing variables on the photoelectrochemical properties of single crystal TIO2 (Rutile)"

## Beschreibung

### Stand der Technik

Die Erfindung geht aus von einem Sensor zur Bestimmung der Konzentration oxidierbarer Bestandteile in einem Gasgemisch, insbesondere zur Bestimmung eines oder mehrerer der Gase NOₓ, CO, H2 und vorzugsweise ungesättigte Kohlenwasserstoffe nach der Gattung des Hauptanspruches. In Abgasen von Otto- und Dieselmotoren, von Verbrennungsmaschinen und Verbrennungsanlagen können erhöhte Konzentrationen oxidierbarer Bestandteile, insbesondere von NOₓ, CO, H2 und Kohlenwasserstoffe auftreten, z.B. als Folge einer Komponentenfehlfunktion, wie eines Einspritzventils, oder als Folge einer unvollständigen Verbrennung. Zur Optimierung der Verbrennungsreaktionen ist es daher notwendig, die Konzentration dieser Abgasbestandteile zu kennen. In der JP-OS 60-61654 ist eine Methode zur Bestimmung oxidierbarer Gase beschrieben, wonach an einer ersten Meßelektrode aus Platinmetallen eine stöchiometrische Umsetzung mit Sauerstoff erfolgt und an einer oder mehreren weiteren metallischen Meßelektroden mit reduzierter katalytischer Aktivität für die Sauerstoff-Gleichgewichtsreaktion Quasi-Gleichgewichtszustände eingestellt werden. Es werden die Nernst-Spannungen E1 und E2 zwischen den Meßelektroden und einer Referenzelektrode gemessen, die einem Referenzgas mit konstantem Sauerstoffpartialdruck ausgesetzt ist, und aus ihrer Differenz aufgrund von Kalibrierungskurven die Konzentration der Gaskomponenten berechnet.

Das Dokument DE-A-42 25 775 offenbart einen Sensor zur Bestimmung oxidierbarer Bestandteile (NO) in einen gasgemisch entsprechend dem Oberbegriff des Anspruchs 1.

### Vorteile der Erfindung

Der erfindungsgemäße Sensor mit den Merkmalen des Hauptanspruchs ermöglicht demgegenüber eine erhöhte Miniaturisierung, eine konstruktive Vereinfachung und eine kostengünstigere Herstellung. Dies wird erfindungsgemäß dadurch erreicht, daß der Festelektrolyt porös gesintert wird. Die Moleküle des Meßgases können deshalb durch die Poren des Festelektrolyten zur Referenzelektrode diffundieren, wo sich das tehermodynamische Gleichgewicht einstellt. Die Referenzelektrode ist somit einem Sauerstoffpartialdruck ausgesetzt, der dem thermodynamischen Gleichgewicht entspricht. Es kann somit auf die Zuführung eines Referenzgases verzichtet werden, was den Sondenaufbau erheblich vereinfacht.

Durch die in den Unteransprüchen aufgeführten Maßnahmen sind vorteilhafte Weiterbildungen und Verbesserungen des im Hauptanspruch angegebenen Sensors möglich.

Die Einstellung des thermodynamischen Gleichgewichtes wird bereits im Festelektrolyten durch die Auswahl eines katalytisch wirksamen Festelektrolytmaterials erfolgen. Als besonderer Vorteil ist dabei anzusehen, daß dadurch gezielt die das Referenzsignal störenden Gase oxidiert werden können, was die Signalauswertung vereinfacht oder überhaupt erst ermöglicht. In zweckmäßiger Weise können zusätzlich zum Festelektrolyten auch die Meßelektroden porös sein, wodurch die Diffusion der Moleküle des Meßgases zur Referenzelektrode weiter verbessert wird.

Indem dem Festelektrolyten in den den Elektroden angrenzenden Bereichen Zusätze beigemischt werden, die den Elektrodenstoffen entsprechen, wird die Elektrodenhaftung und somit die Lebensdauer des Sensors verbessert. Besonders vorteilhaft ist es weiterhin, die Meßelektroden aus Halbleitern aufzubauen, wodurch die Selektivität gegenüber einzelnen der nachzuweisenden Gaskomponenten bedeutend erhöht werden kann.

### Zeichnung

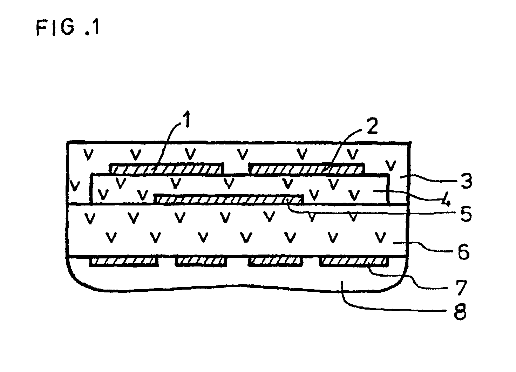

Die Erfindung wird im folgenden anhand einer Zeichnung und einem Ausführungsbeispiel näher beschrieben. Figur 1 zeigt einen Schnitt durch den erfindungsgemäßen Sensor.

### Beschreibung des Ausführungsbeispiels

In Figur 1 ist ein erfindungsgemäßer Sensor im Schnitt dargestellt. Ein isolierendes planares keramisches Substrat 6 trägt auf der einen Großfläche in übereinanderllegenden Schichten eine Referenzelektrode 5 aus vorzugsweise Platin, einen porösen Festelektrolyten 4, Meßelektroden 1 und 2 sowie eine gasdurchlässige Schutzschicht 3. Auf der gegenüberliegenden Großfläche des Substrats ist eine Heizervorrichtung 7 mit Abdeckung 8 aufgebracht.

Zur Bestimmung der Konzentration oxidierbarer Bestandteile in Abgasen wird der Sensor mittels der Heizervorrichtung 7 auf eine Temperatur zwischen 300 und 1000 °C, vorteilhafter Weise auf 600°C erhitzt.

Das Meßgas diffundiert durch den porösen Festelektrolyten an die Referenzelektrode 5, die die Einstellung des Sauerstoff-Gleichgewichtspotentials katalysiert. Die Meßelektroden 1, 2 werden dabei so aufgebaut, daß sie eine reduzierte katalytische Aktivität für die Sauerstoff-Gleichgewichtsreaktion aufweisen. Der Sensor erzeugt über dem sauerstoffionenleitenden Festelektrolyten eine Zellspannung durch eine erste mit Hilfe der Referenzelektrode eingestellte Halbzellenreaktion und eine zweite durch die zu bestimmenden oxidierbaren Gaskomponenten beeinflußte Halbzellenreaktion an mindestens einer Meßelektrode. Über die Kalibrierungskurven werden aus den Spannungswerten die Konzentrationen der Gaskomponenten ermittelt.

Der erfindungsgemäße Sensor ist somit im einfachsten Fall mit einer Referenzelektrode, die die Gleichgewichtseinstellung des Gasgemisches katalysiert und einer Meßelektrode, die die Gleichgewichtseinstellung des Gasgemisches nicht oder nur wenig zu katalysieren vermag, einsatzfähig. Es ist jedoch auch möglich, zwei Meßelektroden aufzubringen, wie in Figur 1 dargestellt, oder auch mehrere Meßelektroden mit jeweils unterschiedlicher katalytischer Aktivität zur Einstellung von Sauerstoff-Gleichgewichtszuständen. Die Meßelektorden reagieren dann mit unterschiedlicher, von der Gasart abhängiger Spannung, bezogen auf die Referenzelektrode.

Bei Anordnungen mit zwei oder mehreren Meßelektroden mit unterschiedlicher katalytischer Aktivität besteht auch die Möglichkeit, Spannungen zwischen den Meßelektroden zur Bestimmung oxidierbarer Gase auszuwerten. Bei Spannungsmessungen zwischen Elektroden, die in der gleichen Ebene und im gleichen Abstand zur Heizervorrichtung angeordnet sind, wie z.B. die Elektroden 1 und 2 in Figur 1, wird zudem der Seebeck-Effekt ausgeschaltet.

Durch Anordnungen mit mindestens zwei Meßelektroden besteht des weiteren die Möglichkeit, die Querempfindlichkeit einer ersten Meßelektrode vollständig oder zumindest teilweise durch das Signal einer weiteren Meßelektrode zu kompensieren, indem die Empfindlichkeit dieser weiteren Meßelektrode auf die störenden Gaskomponenten entsprechend eingestellt wird.

Der Festelektrolyt ist so ausgebildet, z.B. durch Zusatz von 0,01 bis 10 Vol.-% Platin-Pulver, daß der Festelektrolyt die zu messenden Gase katalytisch umsetzt, so daß nur die dem thermodynamischen Gleichgewicht entsprechenden Gase an der Referenzelektrode ankommen oder daß der Festelektrolyt nur die das Referenzsignal störenden Gase umsetzt.

Nach einer weiteren Alternative werden zusätzlich zum Festelektrolyten eine oder mehrere Meßelektroden porös ausgebildet, wodurch die Gasdiffusion zur Referenzelektrode erleichtert wird.

Bezüglich der Zusammensetzung der Meßelektroden ist es möglich, metallische Elektrodenstoffe zu wählen, wie sie z.B. in der JP-OS 60-61654 beschrieben sind, oder aber Halbleiter, die eine hohe spezifische Empfindlichkeit für bestimmte oxidierbare Gase haben. Besonders geeignet sind halbleitende Oxide oder Mischoxide, die Akzeptor- und/oder Donator-dotiert sein können. Die hohe Empfindlichkeit von z.B. Akzeptor- und Donator-dotiertem n-leitendem Titandioxid für insbesondere ungesättigte Kohlenwasserstoffe ist durch die adsorptive Wechselwirkung der Orbitale der Pi-Bindungen der ungesättigten Kohlenwasserstoffe mit den Akzeptorplätzen auf der Halbleiteroberfläche bedingt.

Damit der die Leitfähigkeit verringernde Akzeptoranteil nicht in vollem Umfang elektronisch wirksam werden kann, ist es vorteilhaft, der Elektrode einen die Leitfähigkeit erhöhenden Donator zuzusetzen, insbesondere in höherer Konzentration als den Akzeptor.

Ein Herstellungsverfahren für einen erfindungsgemäßen Sensor beschreibt das nachfolgende Beispiel:
Mit 7% Niob und 3% eines der Übergangsmetalle Nickel, Kupfer oder Eisen dotiertes Rutil wird als 30 µm dicke Siebdruckschicht auf ein Substrat aufgedruckt, das eine Referenzelektrode aus beispielsweise Platin und darüber eine Festelektrolytschicht trägt. Auf der gegenüberliegenden Seite des Substrats ist eine Heizervorrichtung aufgebracht. Der Sensor wird bei 1200°C 90 Minuten lang mit einer Aufheiz/Abkühlrampe von 300°C/Stunde gesintert. Der Festelektrolyt hat nach dem Sintern Poren im Größenbereich von 10nm bis 100 µm.

Mit Hilfe einer isoliert zum Festelektrolyten angebrachten Platinleiterbahn, die nur die Meßelektrode kontaktiert, wird die Spannung an der so aufgebauten Zelle an einem Widerstand von 1 MOhm zwischen der Referenz- und der Rutilelektrode gemessen. Der Sensor wird dabei mit seiner Heizervorrichtung auf 600°C erhitzt.
Als Meßgas wird simuliertes Abgas mit 10% Sauerstoff, 5% Wasser und 5% Kohlendioxid sowie 30 ppm Schwefeldioxid eingesetzt. Oxidierbare Gase werden in den in der Tabelle angegebenen Mengen zugemischt.
Zum Vergleich sind in der letzten Zeile der nachfolgenden Tabelle die Spannungswerte für eine Mischpotentialelektrode aus 20% Gold und 80% Platin angegeben, die eine Meßelektrode nach dem Stand der Technik darstellt.

Tabelle: Spannungswerte (in mV) in Abhängigkeit von der Konzentration an oxidierbaren Gasen und der Zusammensetzung der Meßelektrode

| Spannungen in mV | | | | | |
|---|---|---|---|---|---|
| Rutilelektrode mit 7% Nb und 3% oxidierbare Gase (ppm) | | Ni | Cu | Fe | Vergleichselektrode 20%Au und 80%Pt |
| Propen | 460 | 150 | 45 | 60 | 320 |
| | 180 | 120 | 36 | 47 | 280 |
| | 90 | 90 | 27 | 35 | 180 |
| H2 | 460 | 30 | 12 | 20 | 500 |
| | 180 | 17 | 6 | 10 | 450 |
| | 90 | 5 | 3 | 4 | 380 |
| CO | 460 | 40 | 3 | 16 | 70 |
| | 180 | 15 | - | 7 | 35 |
| | 90 | 7 | - | 6 | 23 |

Aus der Tabelle ist ersichtlich, daß eine Rutil-Halbleiterelektrode mit 7% Niob als Donator und 3% Nickel als Akzeptor die größte Selektivität für Propen als Leitsubstanz zeigt. Das nach dem Stand der Technik bekannte Gold-Platin-System zeigt demgegenüber eine besonders große Wasserstoffquerempfindlichkeit.

## Patentansprüche

1. Sensor zur Bestimmung der Konzentration oxidierbarer Bestandteile in einem Gasgemisch, insbesondere zur Bestimmung eines oder mehrerer Gase NOₓ, CO, H₂ und vorzugsweise ungesättigten Kohlenwasserstoffen, bei dem in übereinanderliegenden Schichten auf der einen Großfläche eines planaren, elektrisch isolierenden Substrates (6) eine die thermodynamische Gleichgewichtseinstellung katalysierende Referenzelektrode (5) , ein ionenleitender poröser Festelektrolyt (4) und mindestens eine dem Meßgas ausgesetzte Meßelektrode (1, 2), die die thermodynamische Gleichgewichtseinstellung des Gasgemisches nicht oder nur wenig zu katalysieren vermag, angeordnet sind, **dadurch gekennzeichnet, daß** der Festelektrolyt Zusätze enthält, die die Oxidation der zu messenden Gase oder nur die Oxidation der das Referenzgas störenden Gase katalysieren.

2. Sensor nach Anspruch 1, **dadurch gekennzeichnet, daß** die Porengröße des Festelektrolyten im Bereich von 10 nm bis 100 µm liegt.

3. Sensor nach einem der vorhergehenden Ansprüche, **dadurch gekennzeichnet, daß** die Meßelektroden (1,2) porös sind.

4. Sensor nach Anspruch 3, **dadurch gekennzeichnet, daß** er zwei oder mehrere Meßelektroden aufweist.

5. Sensor nach einem der vorhergehenden Ansprüche, **dadurch gekennzeichnet, daß** der Festelektrolyt (4) mindestens zwei übereinanderliegende Schichten unterschiedlicher Zusammensetzung aufweist, wobei die der Referenzelektrode (5) zugewandte Schicht das Material enthält, aus dem die Referenzelektrode (5) besteht und/oder die der Meßelektrode (1.2) zugewandte Schicht das Material enthält, aus dem die Meßelelektrode (1,2) besteht.

6. Sensor nach einem der vorhergehenden Ansprüche, **dadurch gekennzeichnet, daß** die Meßelektroden (1,2) aus einem oder mehreren Halbleitern bestehen.

7. Sensor nach Anspruch 6, **dadurch gekennzeichnet, daß** der Halbleiter Akzeptor- und/oder Donator-dotiert ist.

8. Sensor nach Anspruch 6 oder 7, **dadurch gekennzeichnet, daß** der Halbleiter ein Oxid oder ein ein- oder mehrphasiges Mischoxid ist, insbesondere ein Rutil oder Dirutil oder eine Mischung daraus.

9. Sensor nach Anspruch 8, **dadurch gekennzeichnet, daß** der Halbleiter aus Titanoxid besteht.

10. Sensor nach einem der Ansprüche 7 bis 9, **dadurch gekennzeichnet, daß** der Donator in größerer Konzentration als der Akzeptor vorliegt.

11. Sensor nach einem der Ansprüche 7 bis 10, **dadurch gekennzeichnet, daß** der Donator ein Element mit höherer Valenz als das oder die den Halbleiter bildenden Metalle ist.

12. Sensor nach Anspruch 11, **dadurch gekennzeichnet, daß** der Donator Tantal und/oder Niob ist.

13. Sensor nach einem der Ansprüche 7 bis 12, **dadurch gekennzeichnet, daß** der Halbleiter als Akteptor ein oder mehrere Übergangselemente, insbesondere Nickel, Kupfer, Kobalt und/oder Chrom, vorzugsweise Nickel, Kupfer und/oder Kobalt und/oder Seltene Erden enthält.

14. Sensor nach Anspruch 13, **dadurch gekennzeichnet, daß** der Akzeptor als feste Lösung oder als seggregierter Bestandteil im Halbleiter enthalten ist.

15. Sensor nach einem der Ansprüche 7 bis 14, **dadurch gekennzeichnet, daß** der Halbleiter Donator und/oder Akzeptor in einer Konzentration von jeweils 0,01 bis 25% enthält.

16. Sensor nach Anspruch 16, **dadurch gekennzeichnet, daß** der Halbleiter 0,5 bis 15% Niob und 0,25 bis 7% Nickel, vorzugsweise 7% Niob und 3% Nickel enthält.

## Claims

1. Sensor for determining the concentration of oxidizable constituents in a gas mixture, in particular for determining one or more gases NOₓ, CO, H₂ and preferably unsaturated hydrocarbons, in which a reference electrode (5), which catalyses the establishment of a thermodynamic equilibrium, an ion-conducting porous solid electrolyte (4) and at least one measuring electrode (1, 2), which is exposed to the measurement gas and has little or no ability to catalyse the establishment of a thermodynamic equilibrium of the gas mixture, are arranged in layers one on top of the other on one large surface of a planar, electrically insulating substrate (6), **characterized in that** the solid electrolyte contains additives which catalyse the oxidation of the gases to be measured or catalyse only the oxidation of the gases which interfere with the reference gas.

2. Sensor according to Claim 1, **characterized in that** the pore size of the solid electrolyte is in the range from 10 nm to 100 µm.

3. Sensor according to one of the preceding claims, **characterized in that** the measuring electrodes (1, 2) are porous.

4. Sensor according to Claim 3, **characterized in that** it has two or more measuring electrodes.

5. Sensor according to one of the preceding claims, **characterized in that** the solid electrolyte (4) has at least two layers of different compositions positioned one above the other, the layer which faces the reference electrode (5) containing the material of which the reference electrode (5) consists, and/or the layer which faces the measuring electrode (1, 2) containing the material of which the measuring electrode (1, 2) consists.

6. Sensor according to one of the preceding claims, **characterized in that** the measuring electrodes (1, 2) consist of one or more semiconductors.

7. Sensor according to Claim 6, **characterized in that** the semiconductor is acceptor-doped and/or donor-doped.

8. Sensor according to Claim 6 or 7, **characterized in that** the semiconductor is an oxide or a single-phase or multiphase mixed oxide, in particular a rutile or dirutile or a mixture thereof.

9. Sensor according to Claim 8, **characterized in that** the semiconductor consists of titanium oxide.

10. Sensor according to one of Claims 7 to 9, **characterized in that** the donor is present in a greater concentration than the acceptor.

11. Sensor according to one of Claims 7 to 10, **characterized in that** the donor is an element with a higher valency than the metal(s) which form(s) the semiconductor.

12. Sensor according to Claim 11, **characterized in that** the donor is tantalum and/or niobium.

13. Sensor according to one of Claims 7 to 12, **characterized in that** the semiconductor contains as acceptor one or more transition elements, in particular nickel, copper, cobalt and/or chromium, preferably nickel, copper and/or cobalt and/or rare earths.

14. Sensor according to Claim 13, **characterized in that** the acceptor is contained in the semiconductor as a solid solution or as a segregated constituent.

15. Sensor according to one of Claims 7 to 14, **characterized in that** the semiconductor contains donor and/or acceptor in a concentration of in each case 0.01 to 25%.

16. Sensor according to Claim 15, **characterized in that** the semiconductor contains 0.5 to 15% of niobium and 0.25 to 7% of nickel, preferably 7% of niobium and 3% of nickel.

## Revendications

1. Capteur pour déterminer la concentration de composants oxydables contenus dans un mélange gazeux notamment pour déterminer l'un ou plusieurs des gaz NOₓ, CO, H₂ et de préférence des hydrocarbures insaturés, selon lequel dans des couches superposées sur un substrat (6) plan, électriquement isolant, de grande surface, on a une électrode de référence (5) à effet catalytique, réglant l'équilibre thermodynamique, un électrolyte solide (4) poreux, conducteur d'ions et au moins une électrode de mesure (1, 2) exposée aux gaz de mesure, et qui ne catalyse pas ou que très faiblement le réglage de l'équilibre thermodynamique du mélange gazeux,
**caractérisé en ce que**
l'électrolyte solide contient des additifs qui catalysent l'oxydation des gaz à mesurer ou seulement l'oxydation des gaz perturbant le gaz de référence.

2. Capteur selon la revendication 1,
**caractérisé en ce que**
la taille des pores de l'électrolyte solide se situe dans une plage comprise entre 10 nm et 100 µm.

3. Capteur selon l'une des revendications précédentes,
**caractérisée en ce que**
les électrodes de mesure (1,2) sont poreuses.

4. Capteur selon la revendication 3,
**caractérisé en ce qu'**
il comporte deux ou plusieurs électrodes de mesure.

5. Capteur selon l'une quelconque des revendications précédentes,
**caractérisé en ce que**
l'électrolyte solide (4) comporte au moins deux couches superposées ayant une composition différente, la couche tournée vers l'électrode de référence (5) contient le matériau constituant l'électrode de référence (5), et/ou la couche tournée vers l'électrode de mesure (1, 2) contient le matériau constituant l'électrode de mesure (1, 2).

6. Capteur selon l'une quelconque des revendications précédentes,
**caractérisé en ce que**
les électrodes de mesure (1, 2) sont réalisées en un ou plusieurs semiconducteurs.

7. Capteur selon la revendication 6,
**caractérisé en ce que**
le semi-conducteur est dopé en accepteur et/ou en donneur.

8. Capteur selon la revendication 6 ou 7,
**caractérisé en ce que**
le semi-conducteur est un oxyde ou un oxyde mélangé à une ou plusieurs phases, en particulier du rutile ou du dirutile ou un mélange de ceux-ci.

9. Capteur selon la revendication 8,
**caractérisé en ce que**
le semi-conducteur est en oxyde de titane.

10. Capteur selon l'une quelconque des revendications 7 à 9,
**caractérisé en ce que**
la concentration en donneur est supérieure à celle de l'accepteur.

11. Capteur selon l'une quelconque des revendications 7 à 10,
**caractérisé en ce que**
le donneur est un élément de valence plus grande que celle du ou des métaux formant le semi-conducteur.

12. Capteur selon la revendication 11,
**caractérisé en ce que**
le donneur est du tantale et/ou du niobium.

13. Capteur selon l'une quelconque des revendications 7 à 12,
**caractérisé en ce que**
le semi-conducteur contient comme accepteur un ou plusieurs éléments transitoires en particulier du nickel, cuivre, cobalt et/ou chrome de préférence nickel, cuivre et/ou cobalt et/ou des terres rares.

14. Capteur selon la revendication 13,
**caractérisé en ce que**
l'accepteur est une solution solide ou un composant de ségrégation dans un semi-conducteur.

15. Capteur selon l'une quelconque des revendications 7 à 14,
**caractérisé en ce que**
le semi-conducteur contient un donneur et/ou un accepteur suivant une concentration respective de 0,01 à 25 %.

16. Capteur selon la revendication 15,
**caractérisé en ce que**
le semi-conducteur contient entre 0,5 et 15 % de niobium et 0,25 à 7 % de nickel, de préférence 7 % de niobium et 3 % de nickel.
